**Europäisches Patentamt**

(19) **European Patent Office**

**Office européen des brevets**

(11) Numéro de publication: **0 018 935**
**B1**

(12) **FASCICULE DE BREVET EUROPEEN**

(45) Date de publication du fascicule du brevet: **31.10.84**

(21) Numéro de dépôt: **80630009.1**

(22) Date de dépôt: **25.03.80**

(51) Int. Cl.³: **C 21 C 5/32**

(54) Procédé d'affinage d'un bain de métal contenant des matières refroidissantes solides.

(30) Priorité: **30.04.79 LU 81207**

(43) Date de publication de la demande:
**12.11.80 Bulletin 80/23**

(45) Mention de la délivrance du brevet:
**31.10.84 Bulletin 84/44**

(84) Etats contractants désignés:
**AT BE DE FR GB IT NL SE**

(56) Documents cités:
**FR-A-1 261 775**
**FR-A-1 344 238**
**FR-A-1 391 601**
**FR-A-2 068 569**
**FR-A-2 158 140**
**FR-A-2 322 202**

**Steel Times, AoÛt 1981, Redhill pages 391-397**
**REVUE DE METALLURGIE, vol. 75, no. 6, 1978,**
**pages 415-426 G. DENIER et al.: "Nouvelles**
**perspectives de l'affinage LD-études physico-**
**chimiques et tests à l'echelle pilote"**

(73) Titulaire: **ARBED S.A.**
**Avenue de la Liberté 19**
**L-2930 Luxembourg (LU)**

(72) Inventeur: **Schleimer, François**
**rue Bessemer 3**
**L-Esch/Alzette (LU)**
Inventeur: **Henrion, Romain**
**Bv Winston Churchill**
**L-Esch/Alzette (LU)**
Inventeur: **Goedert, Ferdinand**
**11, rue Bessemer**
**L-Esch-sur-Alzette (LU)**
Inventeur: **Lorang, Lucien**
**73 rue de Lasauvage**
**L-Differdange (LU)**

(74) Mandataire: **Neyen, René**
**Administration Centrale de l'Arbed Case postale**
**1802**
**L-2930 Luxembourg (LU)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

## Description

La présente invention concerne un procédé d'affinage de fonte liquide avec addition de matières refroidissantes, par soufflage d'oxygène par le haut et insufflation d'un gaz inerte par le fond à travers le bain de fonte. Un tel procédé, décrit dans la Revue de Métallurgie, volume 75, numéro 6, 1978, pages 415—426, permet de contrôler le degré de moussage de la scorie par l'intermédiaire d'injection de gaz inerte et d'éviter les débordements de scories en augmentant le débit de ce gaz lorsque s'annonce le danger de débordement.

Les procédés d'affinage de la fonte par soufflage d'oxygène permettent, comme on le sait, d'incorporer à la charge des quantités plus ou moins importantes de mitrailles ou éventuellement de minerai. L'importance de cette ajoute de matières refroidissantes dépend de façon essentielle de la quantité d'énergie thermique disponible pour assurer leur fusion.

Dans les procédés d'affinage à l'oxygène l'énergie thermique dégagée au cours de l'élaboration, provient d'une part des réactions exothermiques d'oxydation des éléments oxydables contenus dans la fonte, si bien que la quantité incorporable de matières refroidissantes, est fonction des teneurs en C, Si, P, Mn de la fonte enfournée.

D'autre part, il se dégage au cours de la décarburation de la fonte du CO qui peut subir suivant les conditions de marche du convertisseur une combustion plus ou moins poussée. Cette post-combustion exothermique constitue une source d'énergie supplémentaire que l'on cherche à utiliser pour augmenter le taux de consommation de mitrailles incorporées à la charge.

Les efforts en vue de mieux exploiter toutes les ressources d'énergie présentes dans la charge enfournée, plutôt que d'avoir recours à de l'énergie extérieure, dont l'apport onéreux réduirait les économies réalisables par l'augmentation de l'ajoute de mitrailles, ont donnée naissance à des variantes de la technologie de soufflage.

Ainsi il est p.ex. connu d'augmenter le taux de combustion du CO au-dessus d'un bain de fonte au cours de son affinage par soufflage d'oxygène par le haut en accroissant la quantité d'oxygène disponible à proximité immédiate de la surface du bain et en dehors de la zone centrale de soufflage. On peut arriver à cet accroissement grâce à un soufflage d'oxygène supplémentaire subdivisé en une pluralité de jets couvrant une zone sensiblement annulaire qui recouvre en permanence la plus grande partie possible de la surface du bain. Pour exécuter cette technique il faut disposer de lances spéciales qui comprennent en dehors de tuyères primaires et éventuellement secondaires conventionnelles plusieurs tuyères auxiliaires présentant des angles d'inclinaison spécifiques, adaptés aux dimensions et à la configuration du convertisseur.

Or, malgré l'utilisation de lances spéciales onéreuses en vue d'augmenter le taux de post-combustion du CO près de la surface du bain, tous les efforts imaginables pour augmenter les températures près de la surface du bain dans le but de fondre un surplus de mitrailles, sont contrecarrés par la présence à la surface du bain d'une couche de scorie épaisse et mousseuse qui se forme au cours de l'affinage par soufflage d'oxygène par le haut et qui agit comme un isolant thermique grâce à sa consistance mousseuse.

Le but de l'invention consiste donc à proposer un procédé d'affinage permettant d'augmenter les taux traditionnels d'ajoutes de mitrailles solides tout en évitant les désavantages décrits.

Ce but est atteint par le procédé suivant l'invention dans lequel on provoque à proximité immédiate de la surface du bain de fonte une post-combustion du CO dégagé au cours de la décarburation en répartissant de l'oxygène sur la totalité de ladite surface à l'aide de lances de soufflage et dans lequel on empêche la formation d'une scorie mousseuse en réglant le débit de gaz inerte à partir d'une mesure indicative de l'épaisseur et du dégré de moussage de la couche de scorie qui recouvre le bain de fonte, le débit de gaz inerte étant augmenté en cas d'augmentation de l'épaisseur et du degré de moussage de la couche de scorie".

L'idée qui est à la base de la présente invention consiste à proposer un procédé d'affinage au cours duquel l'interface entre le métal et la scorie est balayé par un gaz de barbotage inerte, si bien que la scorie est en permanence désoxydée et ne peut par conséquent pas prendre de consistance mousseuse. Ce balayage effectué de préférence pendant toute la durée de l'affinage permet de combiner les avantages du procédé d'affinage en four à sole où les réactions entre métal et scorie se déroulent par diffusion lente avec ceux des procédés LD resp. LDAC qui se distinquent par la rapidité des réactions.

L'un des traits caractéristiques des procédés d'affinage de fonte par soufflage d'oxygène par le haut, tels que les procédés LD et LDAC, consiste dans le fait qu'on crée, suivant le déroulement du soufflage, au-dessus du bain une scorie mousseuse et fortement oxygénée. On peut dans une certaine mesure régler la répartition de l'oxygène de soufflage entre la scorie et le métal en variant la distance entre la tête de lance et le niveau du bain, pour un débit constant en oxygène et pour une tête de lance d'une configuration donnée. Ainsi une hauteur élevée de la tête de lance résulte en une oxydation préférentielle de la scorie qui prend une consistance mousseuse, ce qui favorise la déphosphoration et la désulfuration; alors qu'une faible hauteur de la tête de lance conduit à une décarburation accélérée et à un dégagement accru de chaleur, surtout au point d'impact du jet d'oxygène.

Bien qu'en général on recherche la formation d'une scorie mousseuse oxygénée en raison des effets bénéfiques décrits, il existe des désavantages qui sont liés à la scorie mousseuse et oxygénée, l'un d'eux étant le fait qu'une scorie mousseuse empêche le passage vers le bain et les mitrailles y contenues des thermies dégagées par la post-combustion du CO.

Suivant l'invention l'état de moussage est contrôlé par l'introduction par le bas de gaz de barbotage. Ce dernier est un gaz ou un mélange de gaz dont la majeure partie est inerte. Par inerte on entend qu'aucun des gaz utilises ne réagit de façon notable avec les constituants prédo=ments du bain sous les conditions d'insufflation suivant l'invention. En général on utilisera l'azote, qui est disponible à des prix avantageux en cas de fabrication de l'oxygène de soufflage par distillation fractionnée d'air.

Suivant l'invention on injecte le gaz à travers des briques de barbotage logées dans le revêtement du fond du convertisseur et disposées radialement à l'écart de l'axe vertical du point d'impact de l'oxygène dirigé par la haut sur la surface du bain.

Ainsi on parvient à l'aide d'un nombre limité de points d'introduction à soumettre à l'action du gaz injecté la totalité du bain et la totalité de l'interface métal-scorie. L'insufflation controlée de gaz de barbotage a pour effet que la consistance de la scorie reste uniforme et exempte de mousse et que la décarburation de la fonte peut se dérouler d'une manière plus équilibrée et plus homogène à travers le bain. En effet, l'interface métal-scorie étant constamment régénérée par le passage du gaz de barbotage, le déséquilibre physico-chimique entre le métal et la scorie est réduit d'une manière tant rapide qu'uniforme et par là contrôlable, ce dont il résulte par ailleurs une réduction de la durée du temps d'affinage.

La répartition de l'oxygène de soufflage par le haut sur la surface du bain à l'aide de lances qui peuvent être des lances normales et la disposition des briques de barbotage suivant l'invention, comportent également l'avantage d'empêcher qu'il y ait une nitruration intolérable du métal en cours de l'affinage. Par contre une nitruration très marquée peut être observée dans le cas où l'azote est injecté dans les régions de l'impact de l'oxygène soufflé en jet dur par le haut, c.à.d. dans les régions où règne une chaleur extrême.

Suivant l'invention on règle l'intensité d'injection du gaz de barbotage d'après la réponse obtenue par une mesure indicative de la consistance de la couche de scorie c.à.d. de son degré de moussage et de sa hauteur qui recouvre le bain; l'on augmente le débit de gaz en cas d'augmentation de l'épaisseur et du degré de moussage de la scorie et l'on diminue le débit de gaz dans le cas contraire.

Une mesure indicative de l'epaisseur de la couche de scorie et de son degré de moussage résulte selon une première forme d'exécution possible de la surveillance du degré et de la vitesse de désoxydation de la scorie que l'on détermine en suivant la teneur en oxygène des fumées du convertisseur, p.ex. à l'aide d'un spectromètre de masse.

Selon une autre forme d'exécution possible la mesure indicative de l'épaisseur de la couche de scorie et de son degré de moussage peut être basée sur la mesure de l'intensité du son émis par la lance de soufflage d'oxygène par le haut.

On se rend compte que grâce au barbotage que l'on effectue au cours de l'affinage les opérations de réglage de la hauteur de la lance normalement indispensables pour régler le caractère préférentiel des réactions du bain, ne sont plus nécessaires et le rôle de la lance est confiné à celui d'un simple fournisseur d'oxygène dans le cas d'un procédé LD et d'oxygène et de chaux dans le cas d'un procédé LDAC. Ce fait a son importance pratique et économique, étant donné qu'il n'est plus nécessaire que les lances soient presque constamment en mouvement et que les configurations des têtes de lances soient si complexes.

Suivant l'invention on choisit une hauteur de lance telle qu'elle correspond à une position qui conduit normalement à la formation d'une scorie mousseuse et fortement oxygénée.

On démarre alors l'affinage de manière conventionnelle jusqu'à formation d'une couche de scorie d'épaisseur suffisante, déterminée de manière empirique p.ex. par voie d'un sonorimètre, on démarre ensuite l'injection de gaz de barbotage et on règle le débit du gaz de manière à maintenir la scorie dans un état constant et voulu de consistance et de fluidité.

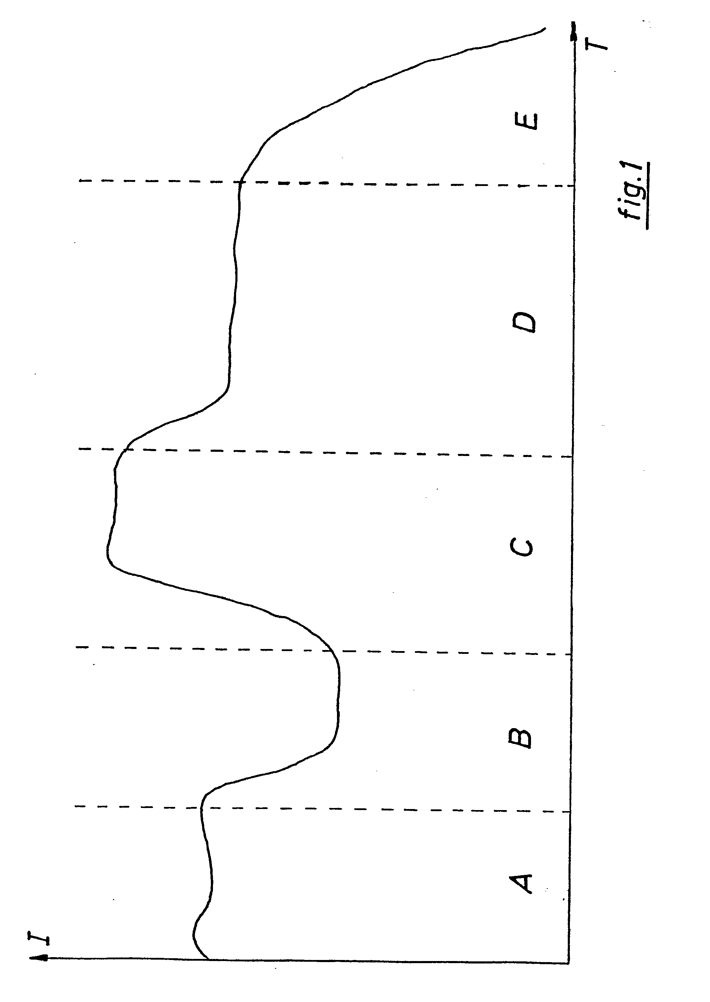

Le graphe en fig. 1, représentant la courbe de l'intensité du son dressée lors de l'affinage d'une charge LDAC suivant l'invention, sert à illustrer le possibilités de réglage de l'épaisseur et de la consistance de la scorie, en modifiant le débit du gaz de barbotage.

Un convertisseur d'une capacité de 150 tonnes d'acier contenait 100 tonnes de fonte phosphoreuse liquide et 68 tonnes de mitrailles solides. Il était équipé d'une lance de soufflage par le haut conventionnelle; dans son fond étaient logées 12 briques de barbotage disposées radialement à l'écart de l'axe vertical du point d'impact du jet d'oxygène. Le gaz de barbotage était de l'azote.

Tandis que les consommations de mitrailles par tonne de fonte réalisables suivant les procédés classiques se situent en moyenne à environ 300 kg lors de l'affinage de fonte pauvre en phosphore et à environ 400 kg lors de l'affinage de fonte phosphoreuse, il fut possible d'incorporer 680 kg de mitrailles par tonne de fonte en opérant suivant l'invention.

Comme il ressort de la fig. 1 on a mesuré pendant la durée T de l'affinage l'intensité I du

son de la lance de soufflage d'oxygène. Pendant la période A le débit d'azote de barbotage par le fond du convertisseur était de 600 Nm³/heure. Une diminution du débit à 400 Nm³/heure, en période B, se fit sentir par une diminution substantielle de l'intensité du son, indicative d'une augmentation de l'épaisseur resp. du moussage de la scorie. On réagit contre ce phénomène, comme illustré en C, en portant le débit du gaz de barbotage à 750 Nm³/heure, et qui eut comme effet une augmentation de l'intensité du son à des valeurs supérieures à celles mesurées en période A où le débit était de 600 Nm³/heure. En période D on ajusta le débit à nouveau à 600 Nm³/heure et on put observer que l'intensité du son s'approcha de celle de la période A et resta stationnaire jusqu'en période finale E où on coupa le débit de gaz de barbotage ce qui fit diminuer la valeur de l'intensité du son à minimum.

Ces résultats démontrent la fiabilité de la méthode de mesure de l'intensité du son vis-à-vis de l'épaisseur et la consistance de la scorie, ainsi que la réglabilité de celles-ci par le paramètre du débit de gaz de barbotage.

Le fait que l'on a pu ajouter dans le bain une quantité de 680 kg de mitrailles par tonne de fonte et faire fondre rapidement et sans problèmes les mitrailles ajoutées, est dû à ce que, suivant le procédé d'affinage selon l'invention on a maintenu la scorie à un état liquide non-moussant, permettant à l'énergie thermique provenant de la post-combustion du CO de se propager dans le bain.

## Revendications

1. Procédé d'affinage de fonte liquide, avec addition de matières refroidissantes, par soufflage d'oxygène par le haut et insufflation d'un gaz inerte par le fond à travers le bain de fonte, caractérisé en ce qu'on provoque à proximité immédiaire de la surface du bain de fonte une post-combustion du CO dégagé au cours de la décarburation en répartissant de l'oxygène sur la totalité de ladite surface à l'aide de lances de soufflage et en ce qu'on empêche la formation d'une scorie mousseuse en réglant le débit de gaz inerte à partir d'une mesure indicative de l'épaisseur et du degré de moussage de la couche de scorie qui recouvre le bain de fonte, le débit de gaz inerte étant augmenté en cas d'augmentation de l'épaisseur et du degré de moussage de la couche de scorie''.

2. Procédé suivant la revendication 1, caractérisé en ce que la mesure indicative du degré de moussage de la couche de scorie est basée sur l'intensité du son émis par la lance de soufflage d'oxygène par le haut.

3. Procédé suivant les revendications 1 et 2, caractérisé en ce que l'on démarre l'affinage de manière conventionnelle jusqu'à formation d'une couche de scorie d'épaisseur suffisante, que l'on démarre ensuite l'injection de gaz de barbotage et que l'on règle le débit du gaz de manière à maintenir à la couche de scorie l'épaisseur et la consistance voulues.

## Patentansprüche

1. Verfahren zum Frischen von flüssigem Eisen, das mit Kühlstoffen beschickt wird, mittels Sauerstoff-Aufblasen sowie Inertgas-Einblasen durch den Gefässboden, dadurch gekennzeichnet, dass man durch Verteilen des Sauerstoffs über die gesamte Badoberfläche mittels Aufblaslanzen in ummittelbarer Nähe der Badoberfläche eine Nachverbrennung des während der Entkohlung gebildeten CO bewirkt und, dass man das Entstehen einer schäumigen Schlacke durch Regulieren der Inertgasmenge verhindert und zwar über eine Messung die Aufschluss gibt über die Dicke und den Schäumungsgrad der Schlackenschicht welche das Eisenbad bedeckt, wobei man die Gasmenge erhöht falls die Dicke und der Schäumungsgrad der Schlackenschicht ansteigt.

2. Verfahren gemäss Anspruch 1, dadurch gekennzeichnet, dass die Messung welche Aufschluss über den Schäumungsgrad der Schlacke gibt, auf der Stärke des von der Sauerstoff-Aufblaslanze erzeugten Geräusches beruht.

3. Verfahren gemäss den Ansprüchen 1 und 2, dadurch gekennzeichnet, dass man das Frischen in üblicher Weise ansetzt, bis sich eine Schlackenschicht von ausreichender Dicke gebildet hat, dass man anschliessend mit dem Einblasen von Spülgas beginnt und, dass man die Spülgasmenge so reguliert, dass die Schlackenschicht die gewünschte Dicke und Konsistenz aufweist und beibehält.

## Claims

1. A process for refining liquid iron that contains solid coolants, by top-blowing oxygen while bottom-injecting an inert gas, characterized in that there is caused in the immediate vicinity of the surface of the bath a post-combustion of CO, generated during decarbonization, by distributing oxygen with the help of lances over the entire surface of the bath and in that one prevents the formation of a foaming slag by regulating the inert gas flow in accordance with the response obtained by a measure indicative of the thickness and the foaming rate of the slag layer which covers said bath, and in that one increases the inert gas flow as the thickness and the foaming rate of the slag increases.

2. Process according to claim 1, characterized in that the measure indicative of the thickness and the foaming rate of the slag is based on the intensity of sound emitted by the top-blowing oxygen lance.

3. Process according to the claims 1 and 2, characterized in that one starts the refining in a conventional manner until the slag layer has reached a sufficient thickness, and that one subsequently commences injecting inert gas while regulating its flow in order to maintain a desired thickness and consistency of the slag layer.

fig.1